# EUROPEAN PATENT SPECIFICATION

(11) **EP 3 421 671 B1**
(45) Date of publication and mention of the grant of the patent: **01.04.2020**
(21) Application number: 18180178.8
(22) Date of filing: 27.06.2018
(51) Int. Cl.: E02F 3/36, F16L 37/06

(54) **COUPLING DEVICE**
KOPPLUNGSVORRICHTUNG
DISPOSITIF DE COUPLAGE

(30) Priority: 27.06.2017 IT 201700071488
(43) Date of publication of application: 02.01.2019
(73) Proprietor: Cangini Benne S.R.L., 47027 Sarsina (FC) (IT)
(72) Inventor: CANGINI, Davide, 47027 Sarsina (FC) (IT)
(74) Representative: Roncuzzi, Davide

(56) References cited:
- EP-A2- 1 318 242
- WO-A1-2014/058380
- CA-A1- 2 727 324
- US-A1- 2014 331 663

## Description

The present invention relates to a hydraulic coupling device for a fast lock. The present invention relates to a hydraulic coupling device for a fast lock that can be coupled to an adapting member for the arm of an excavator. In more detail, the present invention relates to a hydraulic coupling device for a fast lock that can be coupled to an adapting member for the arm of an excavator, suitable to signal the coupling condition in an intrinsically safe manner.

### BACKGROUND TO THE INVENTION

The devices suitable to connect tools to the free end of a mechanical arm of an excavator or a similar machine, or for similar uses, are usually provided with a fast lock that can be connected to the arm's free and with an adapting member applied to the tool at a coupling portion thereof adapted to couple to the arm so as to speed up the connection without the need for an operator's intervention. The adapting member usually comprises a pair of bars arranged according to a given direction to couple to the fast lock in reversible fashion. Ad therefore it allows using the tool with the blade directed indifferently towards the machine or in opposite direction. In this regards, the fast lock longitudinally has a fork-shaped end portion to house one of the two bars of the adapting member, and a coupling device comprising a pair of movable locking pins arranged longitudinally for fast locking, i.e. Transversally to the bars, to couple the remaining bar of the adapting member from the bottom,, so as to determine a stable coupling with the fast lock of the adapting member, and therefore between the tool and the mechanical arm.

The longitudinal actuation of the two locking pins may be mechanical or hydraulic; in this latter case a hydraulic actuator is provided, carried by the fast lock and easily controllable from the cockpit using the same power source as the excavator.

The safety of the coupling between the fast locking pins and the bars of the adapting member is the most sensitive aspect the operators of excavators with mechanical arms shall face every time it is necessary to replace the tool, which usually occurs repeatedly during the day. For this reason, in many cases the operators tend to spend as little time as possible for these operational steps that are considered unproductive, neglecting the very high risk associated with these operations. In order to limit the risk that the operator accidentally starts to work with the tool coupled to only one bar of the adapting member, many solutions have been proposed, where the control of the effective coupling is mechanical or electronic.

Just by way of example, the patent document WO 2014058380 discloses a displacement sensing member provided with a movable element coupled to one of the locking pins giving an electronic signal proportional to the longitudinal position of the pin with respect to the frame, to which a monitor in the operator's cabin is associated. In this way, inside the cabin it is possible to virtually reconstruct the actual configuration of the lock and release device. Many other devices have been proposed for similar operations. It is clearly apparent that the use of sensors and electronic equipment requires frequent adjustments and requires to verify whether the image on the actual configuration of the coupling between adapting member and fast lock matches the actual status. These controls are strictly necessary above all for the vehicles used in critical environments, i.e. where the temperatures and the conditions of use are critical, and where it is possible, at best, to compromise the functionality of the device reducing the quality of the check that can be done through the sensor. Moreover, any power failure and blackout of the sensors and the sensing device or the monitor in the cabin, makes the use of the device impossible. Moreover, these control and maintenance operations shall be performed by highly qualified staff, whose availability is not always ensured for logistics reasons and the resulting costs.

In view of the above description it is clearly apparent that the choice of using an electronic device installed on an excavator or a functionally similar vehicle for verifying the actual situation of the coupling in question can be improved from many points of view.

In view of what described above, the problem of having available a fast lock that is robust and intrinsically safe is still unsolved and represents an interesting challenge for the Applicant.

In view of the above description it would be desirable to have available a fast lock provided with a coupling device that, in addition to limiting and possibly overcoming the drawbacks of the prior art described above, defines a new standard for this kind of equipment usable on machines for earth movement.

Examples of coupling devices and fast locks according to the prior art are known from CA 2727324 and WO 2014/058380.

### SUMMARY OF THE PRESENT INVENTION

The present invention relates to a hydraulic coupling device according to claim 1 and a fast lock according to claim 5. The present invention relates to a hydraulic coupling device for a fast lock that can be coupled to an adapting member for the arm of an excavator. In more detail, the present invention relates to a hydraulic coupling device for a fast lock that can be coupled to an adapting member for the arm of an excavator, suitable to signal the coupling condition in an intrinsically safe manner.

An object of the present invention is to provide a hydraulic coupling device for a fast lock that solves the drawbacks illustrated above and is suitable to satisfy a plurality of requirements that to date have still not been addressed, so as to increase the easiness of use of the fast locks for fastening tools to the arms of machines for earth movement and to increase the intrinsic safety thereof.

According to the present invention, a hydraulic coupling device for a fast lock is provided, whose main features are recited in at least one of the appended claims.

A further object of the present invention is to provide a fast lock provided with a hydraulic coupling device that is resistant, functionally reliable and suitable to make the fast lock easy to be used and intrinsically safe.

According to the present invention a fast lock provided with a hydraulic coupling device that is functionally resistant and reliable is provided, suitable to make the fast lock easy to be used and intrinsically safe, whose main features are recited in at least one of the appended claims.

### BRIEF DESCRIPTION OF DRAWING

Further characteristics and advantages of the hydraulic coupling device and of the fast lock incorporating it according to the invention will be more apparent from the description below, set forth with reference to the attached drawings, that illustrate a non-limiting embodiment, where identical or corresponding parts of the device are identified by the same reference numbers. In particular:
- figure 1 is a longitudinal cross-section of a preferred embodiment of a fast lock provided with a hydraulic coupling device according to the invention coupled to an adapting member for a mechanical arm of an excavator;
- figure 2 is a perspective view of the only fast lock of figure 1 in reduced scale and overturned, with the respective adapting member;
- figure 3 is a rear perspective view of figure 2;
- figures 4a) and e 4b) show a construction diagram of the hydraulic device of figure 1 in two distinct operational configurations;
- figure 5 illustrates figure 2 with some parts removed for the sake of clarity; and
- figure 6 illustrates figure 5 with some parts removed for the sake of clarity.

### DETAILED DESCRIPTION OF THE PRESENT INVENTION

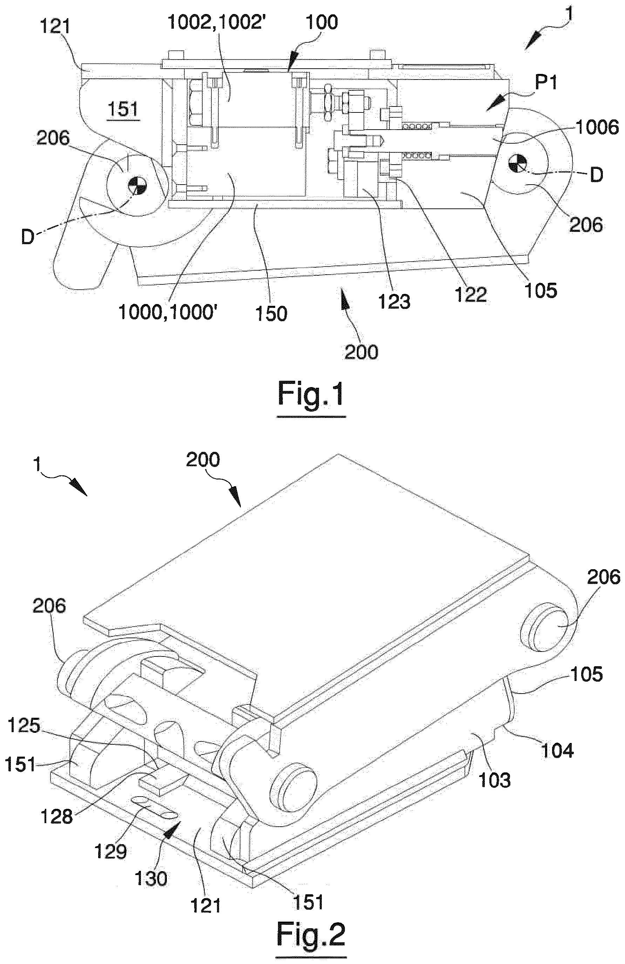

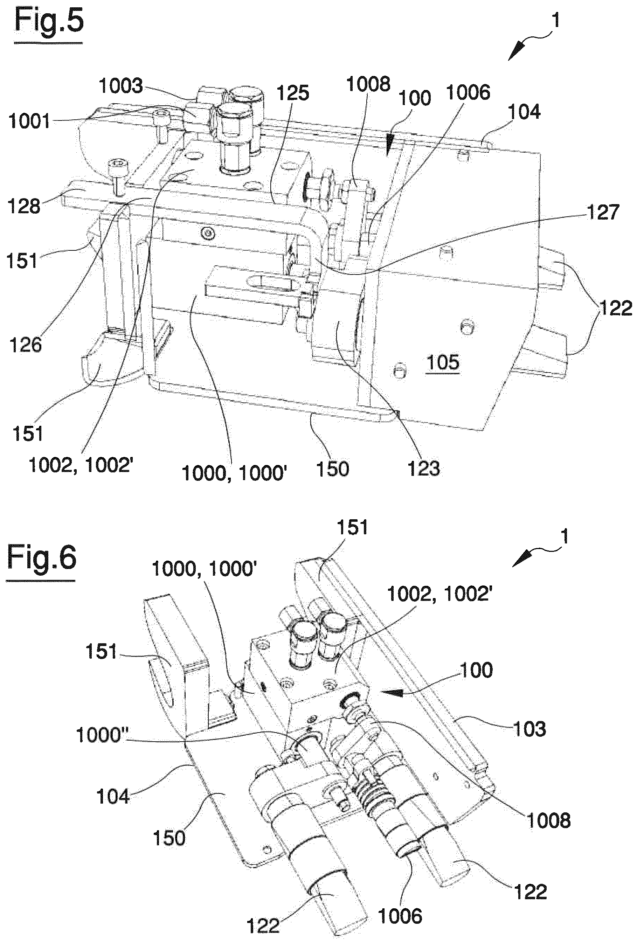

In figure 1 a mechanical unit is shown, allowing coupling a tool, usable for earth movement, and an arm of an excavator or of a functionally equivalent self-propelled machine. In particular, the functional unit comprises a fast lock 1 that embodies a hydraulic coupling device 100 and is shown coupled to an adapting member 200 so configured as to be connected, in selectively releasable fashion, to a tool as described above. The adapting member 200, shown only in figure 1 for the sake of drawing economy, comprises two parallel coupling bars 206 delimiting it longitudinally and directed along a given direction D transverse to the fast lock 1. With particular reference to figure 5, the fast lock 1 is provided with a frame 104 comprising two flanks 103 that are directed transversally to the direction D, are connected by means of a plate 150 and respectively carry a fork 151 per for one of the bars 206. With particular reference to figures 5 and 6, the fast lock 1 comprises a movable equipment 123 carried by the frame 104 in freely sliding manner transversally to the direction D, i.e. Longitudinally for the fast lock 1. This latter also comprises at least one locking pin 122 carried in a axially sliding manner longitudinally, i.e. in a direction transversal to the direction D, by means of a guiding body 105, which is integrally connected to the frame 104 at opposite sides from the forks 151. The fast lock 1 also comprises a tracer 1006, shown only in figures 1 and 6; such tracer 1006 comprises an elongated body carried by the guiding body 105 at opposite side from the forks 151 in an axially sliding manner transversally to the direction D to intercept selectively the bar 206 that is arranged, in figure 1, against the thrust of a spring. It is not necessary to specify that, due to the particular shape of the adapting member 200, the orientation of the fast lock 1 is indifferent with respect to the arrangement of the adapting member 200, as this latter is reversible, as shown in figure 1.

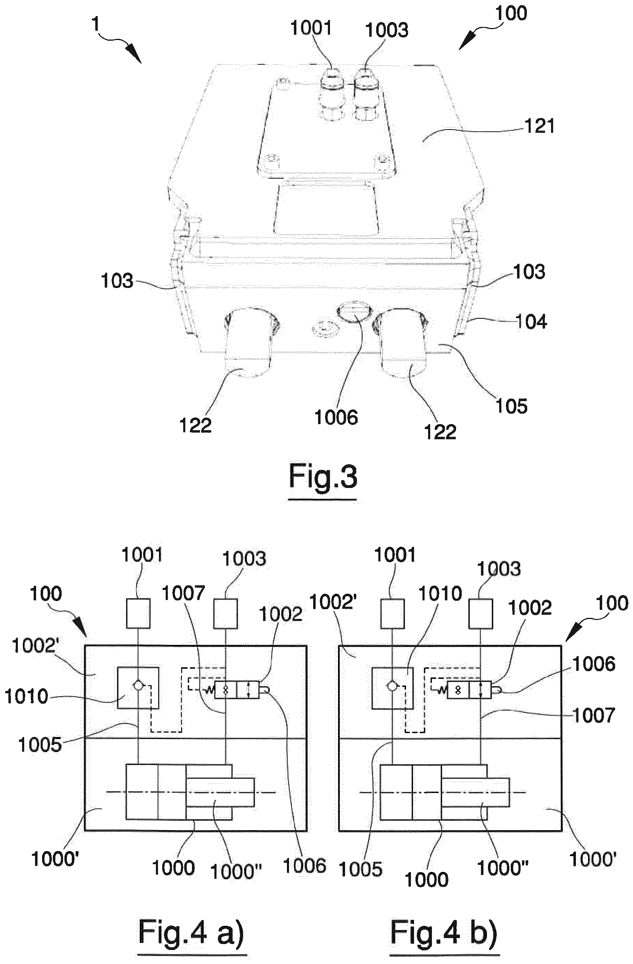

With particular reference to figures 1, 4a), 4b), 5 and 6, the device 100 comprises a linear actuator 1000 incorporated in a first parallelepiped body 1000' and is carried by the frame 104. The actuator 1000 is mechanically connected to each pin 122 through the movable equipment 123 carrying the pins 122 rigidly and is connected to the actuator 1000 through a respective stem 1000'' . In this way, the linear actuator 1000 is suitable to move each pin 122 with reciprocating motion with respect to the frame 104 between a back idle position P1, shown in figure 1, and an interference forward position P2 (shown in figures 2, 3, 5 and 6) where it interferes with the corresponding bar 206, wherein the pins 122 have a respective head arranged below the bar 206. The forward position P2 is described and shown in the Italian patent application no. 102017000059602 filed on 31.05.2017 by the same Applicant, which is embodied herein for the sake of practicality and drawing economy.

With reference to figure 5, the device 100 comprises a substantially L-shaped elongated body 125 having (figure 5) a longitudinal portion 126 and a transverse portion 127 through which it is connected to the movable equipment 123. Therefore, the elongated member 125 is longitudinally movable, in use, with the pins 122. The longitudinal portion 126 is delimited by a free end 128 shown in figure 2, where it faces a small metal plate 129 carried at the bottom by a lid 121 of the fast lock 1, therefore facing the plate 150. The plate 129 is visible from the bottom only when the pins 122 are in the respective forward position P2; on the contrary, when the pins 122 are in the respective back position P1, the free end 128 covers the plate 129. It should be noted that the elongated member 125 geometrically lies on a longitudinal plate for the fast lock 1 passing through the plate 129, so that it is longitudinally aligned with the plate 129.

With particular reference to the diagrams of figures 4a) and 4b), the device 100 comprises a first valve 1002 with two operational positions that is incorporated in a parallelepiped member 1002' arranged below the actuator 1000. The valve 1002 is mechanically connected to the tracer 1006 by means of a Z-shaped element 1008, that allows keeping the tracer between the two pins 122 and is hydraulically connected with the actuator 1000, in a known and not shown manner, whose operation is easily understood by a person skilled in the art due to the overlapping of the respective body 1000' and member 1002'. The tracer 1006 is therefore adapted selectively to switch the valve 1002 and, consequently, to control the actuator 1000 to selectively switch each pin 122 between the back position P1 and the forward position P2 through the first valve 1002.

With particular reference to figures 2-6, the device 100 has a first mouth 1001 and a second mouth 1003 hydraulically connected with the linear actuator 1000, respectively through a supply branch 1005 and a discharge branch 1007 (figures 4a) and 4b)). The mouths 1001 and 1003 are hydraulically connected to the same power source as the excavator, to which the fast lock 1 is connected in a known and not shown manner. It is useful to specify that the first valve 1002 is arranged along the discharge branch 1007 (inside the member 1002'). A second valve 1010 is arranged on the supply branch 1005 inside the member 1002' between the first mouth 1001 and the actuator 1000; moreover, the valve 1010 is connected to the first valve 1002 so as to be controlled by it.

The use of the fast lock 1 and of the related hydraulic device 100 is clearly apparent from the description above and does not require further explanations. However, it could be useful to specify that, in use,, once one of the bars 206 of the adapting member 200 has been hooked by the forks 151 and the excavator's arm, known and not shown, has been rotated up to bring the other bar 206 in the configuration of figure 1, the tracer 1006 will be in a forward/extracted position with respect to the guiding body 105 and will prevent the hydraulic discharge from the actuator 1000 through the second mouth 1003, and the discharge branch 1007. This operational condition is determined thanks to the configuration given to the valve 1002 by the Z-shaped element 1008 and will remain unchanged until the tracer 1006 will touch the respective bar 206. This operational step is shown in figure 4a). In particular, as the clockwise rotation of the fast lock 1 with respect to the adapting member 200 will evolve and the configuration of the fast lock 1 will be that shown in figure 1, the tracer 1006 can take the back position (figure 1), and therefore it can mechanically switch the valve 1002 in the opening position of figure 4b), where the hydraulic discharge is allowed from the actuator 1000 through the discharge branch 1007 and the second mouth 1003. Under these conditions, the forward movement of the stem 1000" of the actuator 1000 towards the bar 206 facing it is allowed until to determine the engagement from the bottom of the same bar 206, i.e. the safe coupling of the adapting member 200 by means of the pins 122.

Obviously, by reversing the supply from the mouth 1001 to the mouth 1003 will determine the back movement of the stem 1000" and the possibility of separating the adapting member 200 from the fast lock 1, therefore from the mechanical arm of the tool, known and not shown.

It should be specified that the hydraulic solution for the tracer 1006 and the actuation of the pins has significant advantages in terms of safety of the actuation and control system. It should be also specified that the elongated member 125 and the plate 129 have the important function of signalling the actual condition of use of the pins 122, as the end 128 of the longitudinal portion 126 alternatively covers and uncovers the plate 129 based on the actual position of the pins 122 (back position P1 or forward position P2). In particular, in the coupling step as shown in figure 2, when only one of the two bars 206 has been coupled by the forks 151, it should be avoided that feeding pressurized oil through the first mouth 1001 causes the switching of the pins 122 (and therefore of the movable equipment 123) from the back position P1 to the forward position P2. To this end, only when the valve 1002 is in the configuration shown in figure 4b the pressurized oil can exit from the second mouth 1003, therefore the pressurized oil can move the stem 1000" and therefore the pins 122. Obviously, this situation is compatible only with the situation where the tracer 1006 is pressed by the contact with the respective bar 206, shown in figure 1. On the contrary, when the tracer 1006 is extracted and the valve 1002 is in the position of figure 4a), the coupling of the fast lock 1 with the adapting member 200 is always incomplete and the arm for using the tool known and not shown must not be used. If the tracer 1006 is not into contact with the bar 206, the pins 122 remain stopped even if pressure is given to the first mouth 1001. To verify the situation, it is possible to observe whether the plate 129 is covered by the end 128 of the longitudinal portion 126. If the plate 129 is uncovered, the bar 206 opposite to the forks 151 is coupled by the pins 122 or is going to be coupled, and the pins 122 are in the forward position P2 or are moving towards the forward position. If the plate 129 is visible, that means that all is right, otherwise the coupling has not been completed.

Therefore, the set of the elongated member 125 and of the plate 129, which both are only part of the fast lock 1, form a control member 130 allowing constantly monitoring the coupling between the pins 122 of the fast lock 1 and the respective bar 206 of the adapting member 200.

Lastly, it is clearly apparent that variants and modifications can be done to the hydraulic coupling device 100 and to the fast lock 1 carrying it, described and illustrated herein, without however departing from the protective scope of the invention as defined by the claims. In view of what described above, it is easily understood that the hydraulic device 100 makes the fast lock 1 robust and intrinsically safe, and therefore adapted to define new standards for this equipment usable on excavators and earth movement machines, especially in the case when these vehicles shall be used in particularly severe environments or in environments where it is difficult and expensive to schedule frequent control and maintenance interventions that shall be performed by highly qualified staff.

## Claims

1. Hydraulic coupling device (100) adapted to be coupled to an adapting member (200) which is adapted in turn to be connected to a tool to be actuated by a mechanical arm, said adapting member (200) being provided with at least two parallel coupling bars (206) directed along a given direction (D); said coupling device (100) being provided with a frame (104) and with a pair of blocking pins (122) carried by said frame (104) in an axially slidable manner transversally to said given direction (D); a tracer (1006) being carried by said frame (104) in an axially slidable manner transversally to said given direction (D) to intercept said bar (206) selectively; said coupling device (100) comprising a linear actuator (1000) carried by said frame (104), mechanically coupled to said pair of blocking pins (122) in order to move same with reciprocating motion with respect to said frame (104) between an idle back position (P1) and an interference forward position (P2) wherein, with said coupling device (100) coupled to said adapting member (200), said blocking pins (122) interfere with one of said bars (206); said coupling device (100) comprising a first valve (1002) mechanically coupled to said tracer (1006) and hydraulically coupled to said actuator (1000) to selectively switch said blocking pins (122) between said back position (P1) and said forward position (P2), **characterized in that** said coupling device (100) comprising a movable equipment (123) carried by said frame (104) in a freely slidable manner transversally to said given direction (D) ; said pins (122) being rigidly carried by said movable equipment (123); said frame (104) having two flanks (103) arranged transversally to said given direction (D) and connected together by means of a plate (150); wherein said device comprises control means (130) carried by said frame (104) to control the coupling condition of said pins (122) with respect to said bar (206) of said adapting member (200).

2. Device according to claim 1, **characterized in that** said control means (130) comprise a small plate (129), carried by a lid (121) and facing said plate (150), and an elongated member (125) integral with said pins (122), wherein the coupling condition of said pins (122) with respect to said bar ((206) is controlled by monitoring the position of said elongated member (125) with respect to said small plate (129).

3. Device according to any one of the previous claims, **characterized by** comprising a first mouth (1001) and a second mouth (1003) hydraulically coupled to said linear actuator (1000) through a supply branch (1005) and a discharge branch (1007) respectively; said first valve (1002) being a 2-position valve and being arranged along said discharge branch (1007) so that it can be selectively switched by means of said tracer (1006); a second valve (1010) being arranged on said supply branch (1005) between said first mouth (1001) and said actuator (1000) and being connected to said first valve (1002) so as to be controlled by this latter.

4. Device according to any one of the previous claims, **characterized in that** said linear actuator (1000) comprises a stem (1000') mechanically connected to said movable equipment (123) .

5. A fast lock (1) comprising an adapting member (200) adapted to be connected to a tool and comprising at least two parallel coupling bars (206) directed along a given direction (D); said fast lock (1) comprising a coupling device (100) adapted to be coupled to said adapting member (200); **characterized in that** said coupling device (100) is a coupling device (100) according to one of claims 1 to 4, wherein, accordingly, said coupling device (100) is provided with a frame (104); with a pair of blocking pins (122) carried by said frame (104) in an axially slidable manner transversally to said given direction (D); a tracer (1006) being carried by said frame (104) in an axially slidable manner transversally to said given direction (D) to intercept one of said at least two coupling bars (206) of said adapting member (200), selectively; said coupling device (100) comprising a linear actuator (1000) carried by said frame (104), mechanically coupled to said pair of blocking pins (122) in order to move same with reciprocating motion with respect to said frame (104) between an idle back position (P1) and an interference forward position (P2) where, with said coupling device (100) coupled to said adapting member (200), said blocking pins (122) interfere with one of said bars (206); said coupling device (100) comprising a first valve (1002) mechanically coupled to said tracer (1006) and hydraulically coupled to said actuator (1000) to selectively switch said blocking pins (122) between said back position (P1) and said forward position (P2),said coupling device (100) comprising a movable equipment (123) carried by said frame (104) in a freely slidable manner transversally to said given direction (D); said pins (122) being rigidly carried by said movable equipment (123); said frame (104) having two flanks (103) arranged transversally to said given direction (D) and connected together by means of a plate (150); control means (130) being carried by said frame (104) to control the coupling condition of said pins (122) with respect to said bar (206) of said adapting member (200).

6. Fast lock according to claim 5, **characterized in that** said control means (130) comprise a small plate (129), carried by a lid (121) and facing said plate (150), and an elongated member (125) integral with said pins (122), wherein the coupling condition of said pins (122) with respect to said bar ((206) is controlled by monitoring the position of said elongated member (125) with respect to said small plate (129).

7. Fast lock according to any one of claims 5 to 6, **characterized in that** said coupling device (100) comprises a first mouth (1001) and a second mouth (1003) hydraulically coupled to said linear actuator (1000) through a supply branch (1005) and a discharge branch (1007) respectively; said first valve (1002) being a 2-position valve and being arranged along said discharge branch (1007) so that it can be selectively switched by means of said tracer (1006); a second valve (1010) being arranged on said supply branch (1005) and being connected to said first valve (1002) so as to be controlled by this latter.

8. Fast lock according to any one of claims 5 to 7, **characterized in that** said linear actuator (1000) comprises a stem (1000') mechanically connected to said movable equipment (123) .

## Patentansprüche

1. Hydraulische Kupplungsvorrichtung (100), die dazu ausgebildet ist, mit einem Anpassungsglied (200) gekoppelt zu werden, das seinerseits dazu ausgebildet ist, mit einem durch einen mechanischen Arm zu betätigenden Werkzeug verbunden zu werden, wobei das Anpassungsglied (200) mit mindestens zwei parallelen Kopplungsstäben (206) versehen ist, die entlang einer bestimmten Richtung (D) ausgerichtet sind; wobei die Kupplungsvorrichtung (100) mit einem Rahmen (104) und mit einem Paar von Blockierstiften (122), die durch den Rahmen (104) auf axial verschiebbare Weise quer zu der bestimmten Richtung (D) getragen werden, versehen ist; wobei ein Taststift (1006) durch den Rahmen (104) auf axial verschiebbare Weise quer zu der bestimmten Richtung (D) getragen wird, um den Stab (206) selektiv abzufangen; wobei die Kupplungsvorrichtung (100) einen Linearaktuator (1000) umfasst, der durch den Rahmen (104) getragen wird, mit dem Paar von Blockierstiften (122) mechanisch gekoppelt ist, um dieselben mit hin- und hergehender Bewegung in Bezug auf den Rahmen (104) zwischen einer hinteren Ruheposition (P1) und einer vorderen Eingriffsposition (P2) zu bewegen, wobei, wenn die Kupplungsvorrichtung (100) mit dem Anpassungsglied (200) gekoppelt ist, die Blockierstifte (122) mit einem der Stäbe (206) in Eingriff kommen; wobei die Kupplungsvorrichtung (100) ein erstes Ventil (1002) umfasst, das mit dem Taststift (1006) mechanisch gekoppelt ist und mit dem Aktuator (1000) hydraulisch gekoppelt ist, um die Blockierstifte (122) selektiv zwischen der hinteren Position (P1) und der vorderen Position (P2) umzuschalten, **dadurch gekennzeichnet, dass** die Kupplungsvorrichtung (100) eine bewegliche Einrichtung (123) umfasst, die durch den Rahmen (104) auf frei verschiebbare Weise quer zu der bestimmten Richtung (D) getragen wird; wobei die Stifte (122) durch die bewegliche Einrichtung (123) starr getragen werden; wobei der Rahmen (104) zwei Flanken (103) aufweist, die quer zu der bestimmten Richtung (D) angeordnet und mittels einer Platte (150) miteinander verbunden sind; wobei die Vorrichtung Steuerungsmittel (130), die durch den Rahmen (104) getragen werden, umfasst, um den Kopplungszustand der Stifte (122) in Bezug auf den Stab (206) des Anpassungsglieds (200) zu steuern.

2. Vorrichtung nach Anspruch 1, **dadurch gekennzeichnet, dass** die Steuerungsmittel (130) eine kleine Platte (129) umfassen, die durch einen Deckel (121) getragen wird und der Platte (150) zugewandt ist, und ein längliches Glied (125), das mit dem Stiften (122) einstückig ausgebildet ist, wobei der Kopplungszustand der Stifte (122) in Bezug auf den Stab (206) durch Überwachen der Position des länglichen Glieds (125) in Bezug auf die kleine Platte (129) gesteuert wird.

3. Vorrichtung nach einem beliebigen der vorhergehenden Ansprüche, **gekennzeichnet durch** Umfassen einer ersten Mündung (1001) und einer zweiten Mündung (1003), die über einen Zuführzweig (1005) bzw. einen Abführzweig (1007) mit dem Linearaktuator (1000) hydraulisch gekoppelt sind; wobei das erste Ventil (1002) ein Zweistellungsventil ist und entlang dem Abführzweig (1007) angeordnet ist, so dass es mittels des Taststifts (1006) selektiv geschaltet werden kann; wobei ein zweites Ventil (1010) an dem Zuführzweig (1005) zwischen der ersten Mündung (1001) und dem Aktuator (1000) angeordnet ist und mit dem ersten Ventil (1002) verbunden ist, um durch dieses letztere gesteuert zu werden.

4. Vorrichtung nach einem beliebigen der vorhergehenden Ansprüche, **dadurch gekennzeichnet, dass** der Linearaktuator (1000) einen Schaft (1000') umfasst, der mit der beweglichen Einrichtung (123) mechanisch verbunden ist.

5. Schnellverschluss (1), umfassend ein Anpassungsglied (200), das dazu ausgebildet ist, mit einem Werkzeug verbunden zu werden, und mindestens zwei parallele Kopplungsstäbe (206) umfasst, die entlang einer bestimmten Richtung (D) ausgerichtet sind; wobei der Schnellverschluss (1) eine Kupplungsvorrichtung (100) umfasst, die dazu ausgebildet ist, mit dem Anpassungsglied (200) gekoppelt zu werden; **dadurch gekennzeichnet, dass** die Kupplungsvorrichtung (100) eine Kupplungsvorrichtung (100) nach einem der Ansprüche 1 bis 4 ist, wobei dementsprechend die Kupplungsvorrichtung (100) mit einem Rahmen (104) versehen ist; mit einem Paar von Blockierstiften (122), die durch den Rahmen (104) auf axial verschiebbare Weise quer zu der bestimmten Richtung (D) getragen werden; wobei ein Taststift (1006) durch den Rahmen (104) auf axiale verschiebbare Weise quer zu der bestimmten Richtung (D) getragen wird, um einen der mindestens zwei Kopplungsstäbe (206) des Anpassungsglieds (200) selektiv abzufangen; wobei die Kupplungsvorrichtung (100) einen Linearaktuator (1000) umfasst, der durch den Rahmen (104) getragen wird, mit dem Paar von Blockierstiften (122) mechanisch gekoppelt ist, um dieselben mit hin- und hergehender Bewegung in Bezug auf den Rahmen (104) zwischen einer hinteren Ruheposition (P1) und einer vorderen Eingriffsposition (P2) zu bewegen, wobei, wenn die Kupplungsvorrichtung (100) mit dem Anpassungsglied (200) gekoppelt ist, die Blockierstifte (122) mit einem der Stäbe (206) in Eingriff kommen; wobei die Kupplungsvorrichtung (100) ein erstes Ventil (1002) umfasst, das mit dem Taststift (1006) mechanisch gekoppelt ist und mit dem Aktuator (1000) hydraulisch gekoppelt ist, um die Blockierstifte (122) selektiv zwischen der hinteren Position (P1) und der vorderen Position (P2) umzuschalten, wobei die Kupplungsvorrichtung (100) eine bewegliche Einrichtung (123) umfasst, die durch den Rahmen (104) auf frei verschiebbare Weise quer zu der bestimmten Richtung (D) getragen wird; wobei die Stifte (122) durch die bewegliche Einrichtung (123) starr getragen werden; wobei der Rahmen (104) zwei Flanken (103) aufweist, die quer zu der bestimmten Richtung (D) angeordnet sind und mittels einer Platte (150) miteinander verbunden sind; wobei Steuerungsmittel (130) durch den Rahmen (104) getragen werden, um den Kopplungszustand der Stifte (122) in Bezug auf den Stab (206) des Anpassungsglieds (200) zu steuern.

6. Schnellverschluss nach Anspruch 5, **dadurch gekennzeichnet, dass** die Steuerungsmittel (130) eine kleine Platte (129) umfassen, die durch einen Deckel (121) getragen wird und der Platte (150) zugewandt ist, und ein längliches Glied (125), das mit den Stiften (122) einstückig ausgebildet ist, wobei der Kopplungszustand der Stifte (122) in Bezug auf den Stab (206) durch Überwachen der Position des länglichen Glieds (125) in Bezug auf die kleine Platte (129) gesteuert wird.

7. Schnellverschluss nach einem beliebigen der Ansprüche 5 bis 6, **dadurch gekennzeichnet, dass** die Kupplungsvorrichtung (100) eine erste Mündung (1001) und eine zweite Mündung (1003) umfasst, die durch einen Zuführzweig (1005) bzw. einen Abführzweig (1007) hydraulisch mit dem Linearaktuator (1000) gekoppelt sind; wobei das erste Ventil (1002) ein Zweistellungsventil ist und entlang dem Abführzweig (1007) angeordnet ist, so dass es mittels des Taststifts (1006) selektiv geschaltet werden kann; wobei ein zweites Ventil (1010) an dem Zuführzweig (1005) angeordnet und mit dem ersten Ventil (1002) verbunden ist, um durch dieses letztere gesteuert zu werden.

8. Schnellverschluss nach einem beliebigen der Ansprüche 5 bis 7, **dadurch gekennzeichnet, dass** der Linearaktuator (1000) einen Schaft (1000') umfasst, der mit der beweglichen Einrichtung (123) mechanisch verbunden ist.

## Revendications

1. Dispositif de couplage hydraulique (100) adapté pour être couplé à un élément d'adaptation (200) qui est adapté à son tour pour être relié à un outil devant être actionné par un bras mécanique, ledit élément d'adaptation (200) comportant au moins deux barres de couplage parallèles (206) dirigées suivant une direction donnée (D) ; ledit dispositif de couplage (100) comportant un cadre (104) et une paire de goupilles de blocage (122) portées par ledit cadre (104) d'une manière axialement coulissante transversalement à ladite direction donnée (D) ; un palpeur (1006) étant porté par ledit cadre (104) d'une manière axialement coulissante transversalement à ladite direction donnée (D) pour intercepter ladite barre (206) de manière sélective ; ledit dispositif de couplage (100) comprenant un actionneur linéaire (1000) porté par ledit cadre (104), couplé mécaniquement à ladite paire de goupilles de blocage (122) afin de déplacer celles-ci avec un mouvement alternatif par rapport audit cadre (104) entre une position arrière de repos (P1) et une position avant d'interférence (P2) dans laquelle, avec ledit dispositif de couplage (100) couplé audit élément d'adaptation (200), lesdites goupilles de blocage (122) interfèrent avec l'une desdites barres (206) ; ledit dispositif de couplage (100) comprenant une première vanne (1002) couplée mécaniquement audit palpeur (1006) et couplée hydrauliquement audit actionneur (1000) pour commuter de manière sélective lesdites goupilles de blocage (122) entre ladite position arrière (P1) et ladite position avant (P2), **caractérisé par le fait que** ledit dispositif de couplage (100) comprend un équipement mobile (123) porté par ledit cadre (104) d'une manière librement coulissante transversalement à ladite direction donnée (D) ; lesdites goupilles (122) étant portées de manière rigide par ledit équipement mobile (123) ; ledit cadre (104) ayant deux flancs (103) disposés transversalement à ladite direction donnée (D) et reliés ensemble au moyen d'une plaque (150) ; ledit dispositif comprenant des moyens de commande (130) portés par ledit cadre (104) pour commander l'état de couplage desdites goupilles (122) par rapport à ladite barre (206) dudit élément d'adaptation (200) .

2. Dispositif selon la revendication 1, **caractérisé par le fait que** lesdits moyens de commande (130) comprennent une petite plaque (129), portée par un couvercle (121) et faisant face à ladite plaque (150), et un élément allongé (125) solidaire desdites goupilles (122), l'état de couplage desdites goupilles (122) par rapport à ladite barre (206) étant commandé en surveillant la position dudit élément allongé (125) par rapport à ladite petite plaque (129) .

3. Dispositif selon l'une quelconque des revendications précédentes, **caractérisé par le fait qu'**il comprend une première ouverture (1001) et une seconde ouverture (1003) couplés hydrauliquement audit actionneur linéaire (1000) par l'intermédiaire d'une branche d'alimentation (1005) et d'une branche de décharge (1007), respectivement ; ladite première vanne (1002) étant une vanne à 2 positions et étant disposée le long de ladite branche de décharge (1007) de telle sorte qu'elle peut être commutée de manière sélective au moyen dudit palpeur (1006) ; une seconde vanne (1010) étant disposée sur ladite branche d'alimentation (1005) entre ladite première ouverture (1001) et ledit actionneur (1000) et étant reliée à ladite première vanne (1002) de façon à être commandée par cette dernière.

4. Dispositif selon l'une quelconque des revendications précédentes, **caractérisé par le fait que** ledit actionneur linéaire (1000) comprend une tige (1000') reliée mécaniquement audit équipement mobile (123).

5. Verrouillage rapide (1) comprenant un élément d'adaptation (200) adapté pour être relié à un outil et comprenant au moins deux barres de couplage parallèles (206) dirigées suivant une direction donnée (D) ; ledit verrouillage rapide (1) comprenant un dispositif de couplage (100) adapté pour être couplé audit élément d'adaptation (200) ; **caractérisé par le fait que** ledit dispositif de couplage (100) est un dispositif de couplage (100) selon l'une des revendications 1 à 4, en conséquence ledit dispositif de couplage (100) comprenant un cadre (104) ; une paire de goupilles de blocage (122) portées par ledit cadre (104) d'une manière axialement coulissante transversalement à ladite direction donnée (D) ; un palpeur (1006) porté par ledit cadre (104) d'une manière axialement coulissante transversalement à ladite direction donnée (D) pour intercepter l'une desdites au moins deux barres de couplage (206) dudit élément d'adaptation (200) de manière sélective ; ledit dispositif de couplage (100) comprenant un actionneur linéaire (1000) porté par ledit cadre (104), couplé mécaniquement à ladite paire de goupilles de blocage (122) afin de déplacer celles-ci avec un mouvement alternatif par rapport audit cadre (104) entre une position arrière de repos (P1) et une position avant d'interférence (P2) dans laquelle, avec ledit dispositif de couplage (100) couplé audit élément d'adaptation (200), lesdites goupilles de blocage (122) interfèrent avec l'une desdites barres (206) ; ledit dispositif de couplage (100) comprenant une première vanne (1002) couplée mécaniquement audit palpeur (1006) et couplée hydrauliquement audit actionneur (1000) pour commuter de manière sélective lesdites goupilles de blocage (122) entre ladite position arrière (P1) et ladite position avant (P2), ledit dispositif de couplage (100) comprenant un équipement mobile (123) porté par ledit cadre (104) d'une manière librement coulissante transversalement à ladite direction donnée (D) ; lesdites goupilles (122) étant portées de manière rigide par ledit équipement mobile (123) ; ledit cadre (104) ayant deux flancs (103) disposés transversalement à ladite direction donnée (D) et reliés ensemble au moyen d'une plaque (150) ; des moyens de commande (130) étant portés par ledit cadre (104) pour commander l'état de couplage desdites goupilles (122) par rapport à ladite barre (206) dudit élément d'adaptation (200).

6. Verrouillage rapide selon la revendication 5, **caractérisé par le fait que** lesdits moyens de commande (130) comprennent une petite plaque (129), portée par un couvercle (121) et faisant face à ladite plaque (150), et un élément allongé (125) solidaire desdites goupilles (122), l'état de couplage desdites goupilles (122) par rapport à ladite barre (206) étant commandé en surveillant la position dudit élément allongé (125) par rapport à ladite petite plaque (129).

7. Verrouillage rapide selon l'une quelconque des revendications 5 et 6, **caractérisé par le fait que** ledit dispositif de couplage (100) comprend une première ouverture (1001) et une seconde ouverture (1003) couplées hydrauliquement audit actionneur linéaire (1000) par l'intermédiaire d'une branche d'alimentation (1005) et d'une branche de décharge (1007), respectivement ; ladite première vanne (1002) étant une vanne à 2 positions et étant disposée le long de ladite branche de décharge (1007) de telle sorte qu'elle peut être commutée de manière sélective au moyen dudit palpeur (1006) ; une seconde vanne (1010) étant disposée sur ladite branche d'alimentation (1005) et étant reliée à ladite première vanne (1002) de façon à être commandée par cette dernière.

8. Verrouillage rapide selon l'une quelconque des revendications 5 à 7, **caractérisé par le fait que** ledit actionneur linéaire (1000) comprend une tige (1000') reliée mécaniquement audit équipement mobile (123).
